# EUROPEAN PATENT APPLICATION

(11) **EP 2 536 077 A1**
(43) Date of publication of application: **19.12.2012**
(21) Application number: 10845513.0
(22) Date of filing: 21.04.2010
(51) Int. Cl.: H04L 12/58, H04W 88/02

(54) **METHOD FOR SWITCHING E-MAIL ACCOUNTS ON MOBILE TERMINAL AND MOBILE TERMINAL THEREOF**

(30) Priority: 09.02.2010 CN 201010111953
(71) Applicant: ZTE Corporation, Shenzhen, Guangdong 518057 (CN)
(72) Inventor: WANG, Xiaowei, Shenzhen Guangdong 518057 (CN)
(74) Representative: Jansen, Cornelis Marinus
(86) International application number: PCT/CN2010/071958
(87) International publication number: WO 2011/097839

(57) **Abstract**

The disclosure discloses a method for switching e-mail accounts on a mobile terminal and the mobile terminal. The following steps are involved in a solution of the disclosure: setting the information of multiple mail accounts on the mobile terminal; editing an e-mail under a first mail account which is currently activated and selecting a mail account for sending; when determining that the selected mail account for sending is the first mail account, performing the sending process directly; when determining that the selected mail account for sending is not the first mail account, switching the mail account for sending to a second mail account, saving the currently edited e-mail to the second mail account, and performing the sending process. The disclosure implements the function that the mail is edited under one of the mail accounts and sent under another already-configured mail account when there are multiple mail accounts. Furthermore, the mail account which is currently activated is switched only at the sending stage, and it is re-switched back to the previous mail account after the completion of the sending. Then system resources are saved.

## Description

### Field of the Invention

The disclosure relates to the field of communication, and particularly to a method for an electronic mail (e-mail) client to switch among multiple mail accounts on a mobile terminal and the mobile terminal.

### Background of the Invention

Electronic mail, also known as electronic mailbox or E-post, is a communication method for exchanging information electronically and is a service used most commonly on various networks all over the world. This kind of non-interactive communication accelerates information exchange and data transmission, and is a simple and rapid method. Processes, including transmission, reception, storage etc., of various signals are realized by the Internet which connects the whole world, and mails are sent to every corner of the world. In addition, e-mail, which is not limited to transmission of text information, can also transmit various information including files, voices, graphs, images etc. in form of attachments.

With the rapid development of information technology, currently e-mail client software is integrated in most middle and high-end mobile terminals to facilitate users to log in their own mail accounts, i.e. e-mail accounts, to read and send e-mails at any time after performing a series of simple configurations on the mobile terminals.

Currently, all e-mail client software built in mobile terminals is generally able to support a user to create a plurality of mail accounts, each of which is configured with a set of boxes belonging to the mail account, generally including an inbox, a daft box, a sent box and an outbox. A user may perform operations and management, similar to those in a web mailbox, for a mail under a designated mail account on a mobile terminal. The basic operations include: receiving a new mail, synchronizing a mail, deleting a mail, sending a mail, forwarding a mail, replying to a mail etc.

When a plurality of mail accounts are configured on a mobile terminal, only one mail account can be operated by a user, and the user has to manage his/her own mailbox under a designated mail account. When the user needs to switch to another mail account to perform operations, usually he/she needs to log out the currently-operated mail account, switch the mail account through the configuration module, and then log in another designated mail account to perform operations.

Under such an operation mode, when a user performs operations under a mail account, e.g. when the user has composed a new e-mail and hopes to send the e-mail from another mail account of the user, he/she has to compose an identical e-mail in another mail account and send the e-mail subsequently. The operation mode above fails to meet the requirement that a user wants to use another mail account to forward and reply to an e-mail under the current mail account.

### Summary of the Invention

The technical problem to be solved by the disclosure is to provide a method for switching e-mail accounts on a mobile terminal and the mobile terminal, so as to enable an e-mail client on the terminal to edit an e-mail under a mail account and send the e-mail under another already-configured mail account.

To solve the technical problem above, the technical solution of the disclosure is implemented as follows.

A method for switching multiple accounts for an e-mail client on a mobile terminal, which comprises the following steps:
setting information of multiple mail accounts on a mobile terminal;
editing an e-mail under a first mail account which is currently activated and selecting a mail account for sending; and
performing a sending process directly when determining that the selected mail account for sending is the first mail account; and switching the mail account for sending to a second mail account, saving the currently edited e-mail to the second mail account, and performing the sending process when determining that the selected mail account for sending is not the first mail account.

Switching the mail account for sending to the second mail account further comprises: record the information of the first mail account; and
the method further comprises: after sending the e-mail successfully, read the saved information of the first mail account and re-activate the first mail account.

Setting the information of the multiple mail accounts comprises:
setting one or more of a username, a password, a sending server address, a receiving server address and an e-mail protocol type of each mail account, and storing the setting in the form of a configuration file in a file system of the mobile terminal.

The method further comprises: set a parameter for indicating an activation state of a mail account.

Selecting a mail account for sending comprises:
after selecting the second mail account, record the selected second mail account.

A mobile terminal for switching e-mail accounts on the mobile terminal, comprising:
a setting module, configured to set information of multiple mail accounts on the mobile terminal;
a selecting module, configured to edit an e-mail under a first mail account which is currently activated and select a mail account for sending ; and
a processing module configured to perform, when determining that the selected mail account for sending is the first mail account, the sending process directly; and switch, when determining that the selected mail account for sending is not the first mail account, the mail account for sending to a second mail account, save the currently edited e-mail to the second mail account, and perform the sending process.

The processing module is further configured to: record the information of the first mail account; and read the saved information of the activated first mail account and re-activate the first mail account after sending the e-mail successfully.

The setting module is further configured to the setting module is further configured to set one or more of a username, a password, a sending server address, a receiving server address and an e-mail protocol type of each mail account, and store the setting in the form of a configuration file in a file system of the mobile terminal.

The setting module is further configured to: set a parameter for indicating an activation state of a mail account.

The mobile terminal further comprises: a recording module, configured to record the selected second mail account after selecting the second mail account,

The disclosure implements the function that when using an e-mail client of a mobile terminal, if there are multiple mail accounts, a mail is edited under one of the mail accounts and sent under another already-configured mail account. Furthermore, only at the sending stage the e-mail client is switched to the mail account which is currently activated, and it is switched back to the previous mail account after the completion of the sending operation. Thus this solution avoids a huge volume of operations including loading a mailbox and refreshing a mail list etc. after switching a mail account, reduces processing flows of the mobile terminal, and saves system resources.

### Brief Description of the Drawings

Fig. 1 is a flowchart illustrating a method for switching multiple accounts for an e-mail client on a mobile terminal of the disclosure;
Fig. 2 is a structural diagram illustrating a mobile terminal for switching multiple accounts for an e-mail client on a mobile terminal of the disclosure;
Fig. 3 is an overall flowchart of interfaces for switching a mail account for sending for a newly created e-mail of the disclosure;
Fig. 4 is an overall flowchart of interfaces for switching a mail account for sending after replying to and forwarding an e-mail of the disclosure; and
Fig. 5 is a flowchart of switching a mail account for sending and sending an e-mail on an editing interface of the disclosure.

### Detailed Description of the Embodiments

The embodiments of the disclosure are described below in detail with reference to the drawings.

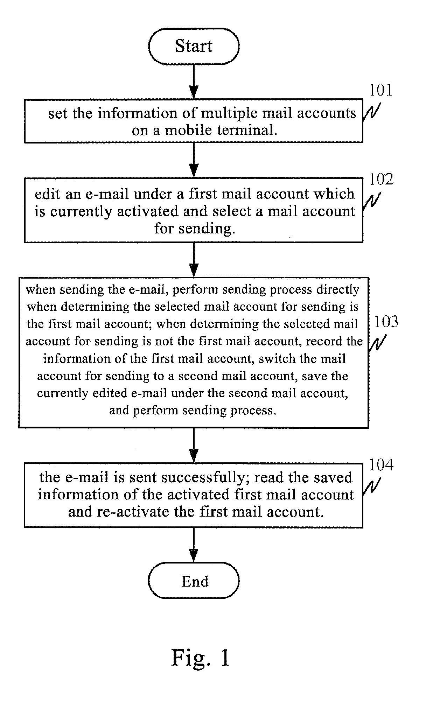

As shown in Fig. 1, which is a flowchart illustrating a method for switching multiple accounts for an e-mail client on a mobile terminal of the disclosure, the method comprises the following steps.

Step 101: setting the information of multiple mail accounts on a mobile terminal.

The information of multiple mail accounts is set, e.g. one or more of information including a username, a password, a sending server address, a receiving server address and an e-mail protocol type etc. of each mail account. And the information of the mail account is stored in the form of a configuration file in a file system of the mobile terminal.

A parameter for indicating an activation state of a mail account is set. The configuration file comprises the parameter for indicating whether or not the mail account is a mail account which is currently activated. Operations including manual reception, timing reception and sending of a mail etc. can be performed only under a mail account which is currently activated.

Step 102: editing an e-mail under a first mail account which is currently activated and selecting a mail account for sending.

The specific implementation of this step is: providing to a user an option for selecting a mail account for sending , and listing in the option all mail accounts which have been currently configured.

After the user selects a second mail account from the mail accounts, the selection of the user is only recorded, but the selected mail account is not switched to the activated second mail account immediately.

Step 103: when sending the e-mail, when determining that the selected mail account for sending is the first mail account, the sending process directly is performed; and when determining that the selected mail account for sending is not the first mail account, the information of the first mail account is recorded, the mail account for sending is switched to a second mail account, the currently edited e-mail is stored to the second mail account, and the sending process is performed.

Step 104: the e-mail is sent successfully; the saved information of the activated first mail account is read and the first mail account is re-activated.

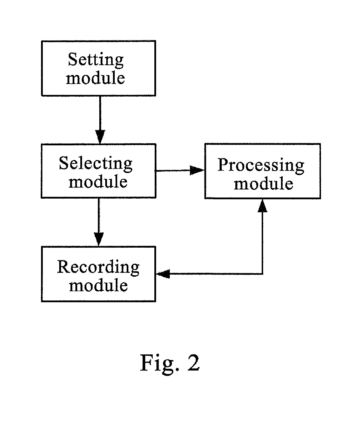

As shown in Fig. 2, which is a structural diagram illustrating a mobile terminal for switching multiple accounts for an e-mail client on the mobile terminal of the disclosure, the mobile terminal comprises:
a setting module, configured to set the information of multiple mail accounts on the mobile terminal;
a selecting module, configured to edit an e-mail under a first mail account which is currently activated and select a mail account for sending ; and
a processing module configured to perform the sending process directly when determining that the selected mail account for sending is the first mail account; and record the information of the first mail account, switch the mail account for sending to a second mail account, save the currently edited e-mail to the second mail account when determining that the selected mail account for sending is not the first mail account, and perform the sending process.

In a preferred embodiment of the disclosure, the processing module is further configured to: read the saved information of the activated first mail account when the e-mail is sent successfully and re-activate the first mail account.

In a preferred embodiment of the disclosure, the setting module is configured to set one or more information of a username, a password, a sending server address, a receiving server address and an e-mail protocol type etc. of each mail account, and store the one or more information in the form of a configuration file in a file system of the mobile terminal.

In a preferred embodiment of the disclosure, the setting module is further configured to: set a parameter for indicating an activation state of a mail account.

In a preferred embodiment of the disclosure, the mobile terminal further comprises: a recording module, configured to record the selected second mail account after selecting a second mail account.

The technical solution of the disclosure is described exemplarily below according to examples of specific applications.

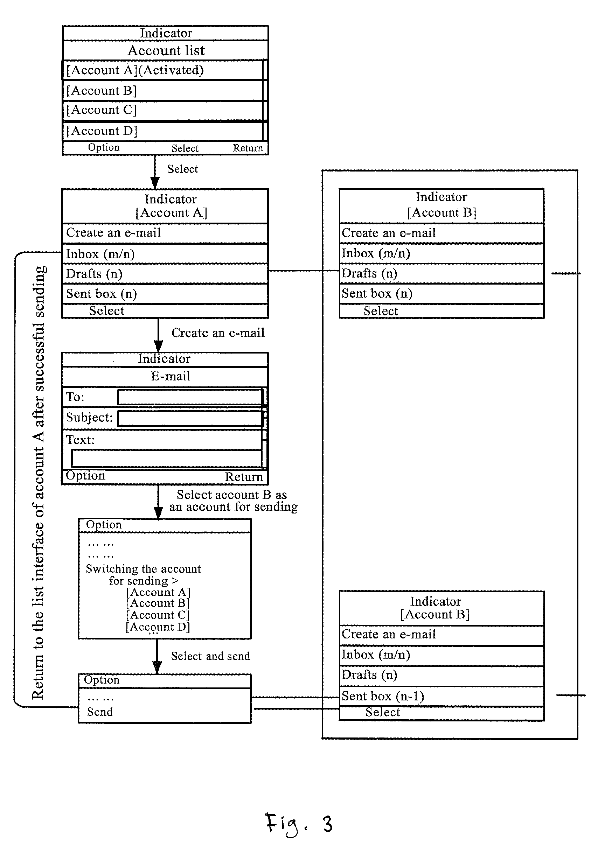

A process of interfaces for switching a mail account for sending an e-mail after the email is created is as shown in Fig. 3, which specifically comprises:
selecting a mail account A as a mail account which is currently activated in a mail account list interface;
selecting to create an e-mail in a box list interface of the mail account A;
after editing an e-mail, selecting a mail account list option in an option menu (mail accounts which have been configured in the mobile terminal have been listed one by one in the mail account list option), and selecting a mail account for sending the e-mail, e.g. a mail account B;
selecting to send the e-mail, and packing and storing the e-mail in the outbox of the mail account B at the moment;
after sending the e-mail successfully, moving the e-mail stored in the outbox of the mail account B to the Sentbox of the mail account B; and if the sending fails, continuing storing the e-mail in the outbox of the mail account B; and
after the completion of the sending, closing the editing interface and returning to the box list interface of the mail account A.

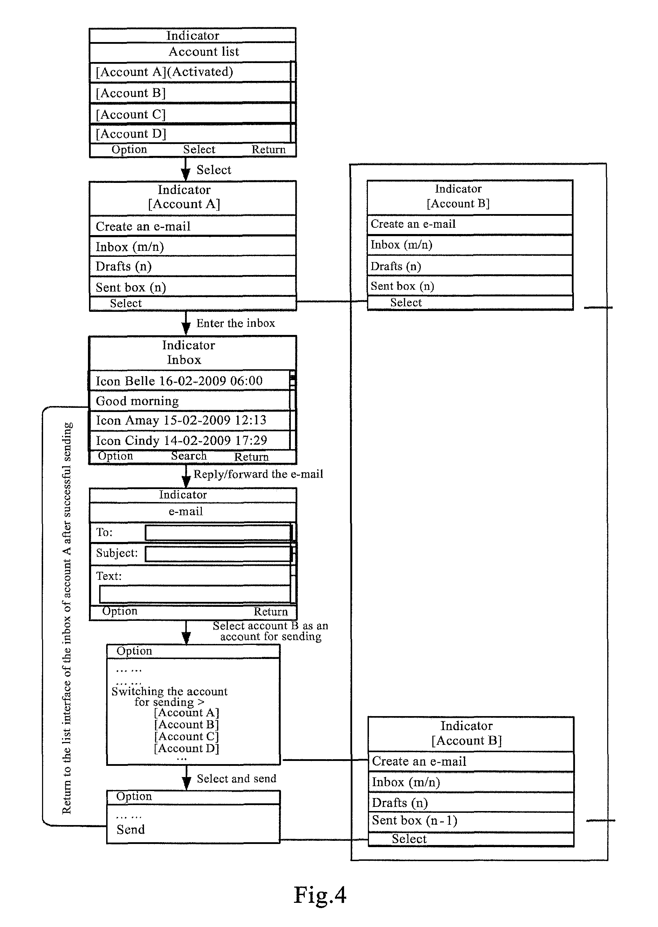

Fig. 4 shows a process of interfaces for switching a mail account for sending an e-mail after replying to and forwarding the e-mail, which specifically comprises:
1) selecting a mail account A as a mail account which is a currently activated in a mail account list interface;
2) in a box list interface of the mail account A, selecting the inbox to enter an inbox list interface of the mail account A;
3) in the inbox list interface, performing operations, such as replying, forwarding etc., for an e-mail in the inbox, and then entering an editing interface of the e-mail;
4) after editing the e-mail necessarily, selecting a mail account list option in an option menu (mail accounts which have been configured in the mobile terminal have been listed one by one in the mail account list option), and selecting a mail account for sending the e-mail, e.g. a mail account B;
   selecting to send the e-mail, and packing and storing the e-mail in the outbox of the mail account B at the moment;
   after sending the e-mail successfully, moving the e-mail stored in the outbox of the mail account B to the Sentbox of the mail account B; and if the sending fails, continuing storing the e-mail in the outbox of the mail account B; and
   after the completion of the sending, closing the editing interface and returning to the box list interface of the mail account A.

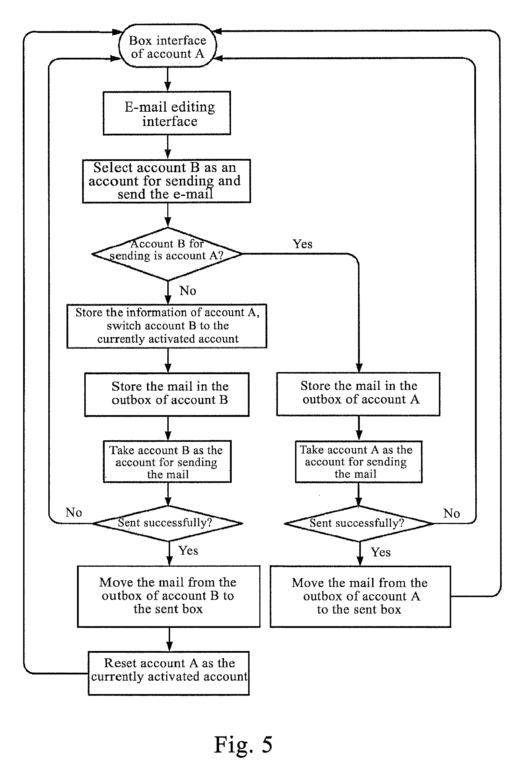

Fig. 5 shows a specific process for sending an e-mail by another mail account after the mail is edited, which specifically comprises the following steps:
if a mail account A is currently activated, creating an e-mail in the mail account A;
selecting a mail account list option in an option menu, wherein mail accounts which have been configured in a mobile terminal have been listed one by one in the mail account list option; and selecting a mail account for sending the e-mail, e.g. a mail account B;
selecting to send the e-mail;
a bottom program inspecting whether the mail account for sending selected by a user is the mail account which is currently activated; and if no, storing the information of the mail account which is currently activated first, and then setting the mail account for sending B selected by the user as the mail account which is currently activated;
packing and storing the e-mail in the outbox of the mail account B which is currently activated;
performing the sending process;
after sending the e-mail successfully, moving the e-mail stored in the outbox of the mail account B which is currently activated to the sent box; and if the sending fails, continuing storing the e-mail in the outbox; and
after the completion of the sending operation, activating the mail account A which is saved earlier, closing the editing interface and returning to the parent directory.

To sum up, the disclosure has the following beneficial effect: a user is provided with a method for switching a mail account to another mail account to send the e-mail, after an e-mail is edited in a terminal. Therefore, interfaces in the mobile terminal are opened, returned and closed layer by layer. By applying such a method that the mail account is switched only at the sending stage and it is switched back to the previous mail account after the completion of the sending operation, information such as a list etc. under another mail account does not need to be reloaded and refreshed after the mail account is switched. Thus, the solution reduces processing flows of the mobile terminal and saves system resources.

The above are only preferred embodiments of the disclosure and should not be used to limit the disclosure. For those skilled in the art, the disclosure may have various modifications and changes. Any modifications, equivalent replacements, improvements and the like within the spirit and principle of the disclosure shall fall within the scope of protection of the disclosure.

## Claims

1. A method for switching e-mail accounts on a mobile terminal, **characterized by** comprising:
setting information of multiple mail accounts on a mobile terminal;
editing an e-mail under a first mail account which is currently activated and selecting a mail account for sending ; and
performing a sending process directly when determining that the selected mail account for sending is the first mail account; and switching the mail account for sending to a second mail account, saving the currently edited e-mail to the second mail account, and performing the sending process when determining that the selected mail account for sending is not the first mail account.

2. The method according to claim 1, **characterized in that**
switching the mail account for sending to the second mail account further comprises: recording information of the first mail account; and
the method further comprises: after sending the e-mail successfully, reading the saved information of the first mail account and re-activating the first mail account.

3. The method according to claim 1, **characterized in that** setting the information of the multiple mail accounts comprises:
setting one or more of a username, a password, a sending server address, a receiving server address and an e-mail protocol type of each mail account, and storing the setting in the form of a configuration file in a file system of the mobile terminal.

4. The method according to claim 1, **characterized in that** the method further comprises:
setting a parameter for indicating an activation state of a mail account.

5. The method according to any one of claims 1 to 4, **characterized in that** selecting a mail account for sending comprises:
recording the selected second mail account after selecting the second mail account.

6. A mobile terminal, **characterized by** comprising:
a setting module, configured to set information of multiple mail accounts on the mobile terminal;
a selecting module, configured to edit an e-mail under a first mail account which is currently activated and select a mail account for sending; and
a processing module configured to perform, when determining that the selected mail account for sending is the first mail account, the sending process directly; and switch, when determining that the selected mail account for sending is not the first mail account, the mail account for sending to a second mail account, save the currently edited e-mail to the second mail account, and perform the sending process.

7. The mobile terminal according to claim 6, **characterized in that**
the processing module is further configured to: record the information of the first mail account; and read the saved information of the activated first mail account and re-activate the first mail account after sending the e-mail successfully.

8. The mobile terminal according to claim 6, **characterized in that**
the setting module is further configured to set one or more of a username, a password, a sending server address, a receiving server address and an e-mail protocol type of each mail account, and store the setting in the form of a configuration file in a file system of the mobile terminal.

9. The mobile terminal according to claim 6, **characterized in that** the setting module is further configured to: set a parameter for indicating an activation state of a mail account.

10. The mobile terminal according to any one of claims 6 to 9, **characterized in that** the mobile terminal further comprises:
a recording module, configured to record the selected second mail account after selecting the second mail account.
